# EUROPÄISCHE PATENTANMELDUNG

(11) **EP 0 575 855 A1**
(43) Veröffentlichungstag der Anmeldung: **29.12.1993**
(21) Anmeldenummer: 93109489.0
(22) Anmeldetag: 14.06.1993
(51) Int. Cl.: C08J 11/04, C08F 291/00

(54) **Verfahren zur Herstellung von Kunststoffrezyklaten**

(30) Priorität: 25.06.1992 DE 4220775
(71) Anmelder: LEUNA-WERKE GMBH, D-06236 Leuna (DE)
(72) Erfinder: Bühler, Konrad, Dr., D-7030 Leipzig (DE); Gebauer, Manfred, Dr., D-4090 Halle (DE)

(57) **Zusammenfassung**

2.1. Aus Kunststoffabfällen der Hausmüllaufbereitung, der Kabelschrottaufbereitung oder der Elektrogeräteschrottaufbereitung sollen Rezyklate mit verbesserten Werkstoffeigenschaften hergestellt werden.

2.2. Das Problem wurde durch Homogenisierung der Kunststoffabfälle aus unterschiedlichen Kunststoffen in der Schmelze gelöst, wobei in die Kunststoffschmelze ungesättigte Monomere in Anteilen von 0,2 bis 10 Masse% sowie radikalische Initiatoren eindosiert werden.

2.3. Die Rezyklate können zur Herstellung von Kunststoffhalbzeugen und -formstoffen eingesetzt werden.

## Beschreibung

Das hohe Aufkommen von Kunststoffabfällen in Haus- und Gewerbemüll erfordert eine industrielle Verwertung dieser Kunststoffabfälle, die überwiegend als Kunststoffgemisch anfallen. Bevorzugt erfolgt eine energetische Nutzung der Kunststoffabfälle durch Energieerzeugung in Müllverbrennungsanlagen.

Bekannte Verfahren zur stofflichen Verwertung von Kunststoffabfällen bestehen in der Synthesegasherstellung durch Feststoffvergasung, der Schmelzevergasung und der degradativen Extrusion von Kunststoffabfällen (G. Menges, Kunststoffe 81 (1991) 1, 6-14; G. Menges, Kunststoffe 81 (1991) 12, 1066-1069).

Eine stoffliche Verwertung von Kunststoffabfällen durch Herstellung von Kunststoffhalbzeugen und -formstoffen aus Kunststoffrezyklaten ist weitgehend auf Kunststoffrezyklate aus Gewerbekunststoffabfällen beschränkt, bei dem der Kunststoff annähernd sortenrein vorliegt. Da unterschiedliche Kunststoffe, wie sie im aufbereiteten Hausmüll vorliegen, weitgehend unverträglich sind und mehrphasige Strukturen bei der thermoplastischen Aufbereitung zu Rezyklaten bilden, besitzen daraus hergestellte Halbzeuge und Formstoffe nur ein geringes Festigkeitsniveau und eine geringe Zähigkeit und schränken dadurch die Einsatzmöglichkeiten dieser Rezyklate stark ein.

Eine Verbesserung der Werkstoffeigenschaften von Halbzeugen und Formstoffen aus Rezyklaten unverträglicher Kunststoffe kann durch Zusatz von Dispergatoren und Verträglichkeitsvermittlern bei der Rezyklatherstellung sowie durch geringe Kovernetzung der Rezyklatkomponenten erfolgen (J. Lemmens, "Verträglichmacher für Kunststoffe" in: Menges/Michaell/Bittner "Recycling von Kunststoffen", Carl-Hanser-Verlag 1991; L. Starke, Kunststoffe 82 (1992) 1, 31-36). Als Verträglichkeitsvermittler für Kunststoffgemische sind Styren-MSA-Copolymere, Ethylen-Acrylat-Acrylsäure-Terpolymere sowie Pfropfcopolymere auf Polyolefinbasis geeignet. Für die Kompatibilisierung von Kunststoffmischungen aus Haushaltsabfällen haben sich insbesondere Polymerkombinationen auf Basis von Ethylen-Vinylacetat-Copolymeren und Ethylen-Propylen-Dien-Terpolymeren bewährt (EP 287 140; US 167 697).

Der Zusatz polymerer Kompatibilisatoren bei der Herstellung höherwertiger Rezyklate ist jedoch relativ aufwendig und steht oftmals nicht in Relation zur erzielten Eigenschaftsverbesserung. Der Erfindung liegt das Problem zugrunde, die Werkstoffeigenschaften von Kunststoffrezyklaten aus unterschiedlichen Kunststoffen, wie sie bei der Hausmüll- und Gewerbemüllaufbereitung anfallen, weiter zu verbessern.

Dieses Problem wurde durch ein Verfahren zur Herstellung von Kunststoffrezyklaten durch Homogenisierung von Kunststoffabfällen aus unterschiedlichen Kunststoffen in der Schmelze gelöst, wobei erfindungsgemäß in die homogenisierte Schmelze ungesättigte Monomere in Anteilen von 0,2 bis 10 Masse% sowie radikalische initiatoren eindosiert werden. Als Kunststoffabfälle werden Kunststoffgemische aus der Hausmüll- oder Gewerbemüllaufbereitung eingesetzt, insbesondere zerkieinerter gewaschener unsortierter Kunststoffhausmüll, die Schwimmfraktion der Kunststoffmüllaufbereitung, aufbereitete Altfolien sowie der Kunststoffanteil aus der Kabel-, Elektro- und Haushaltgeräteschrottaufbereitung.

Als ungesättigte Monomere, die in die homogenisierte Schmeize bei der Herstellung von Kunststoffrezyklaten eindosiert werden, sind ungesättigte Ester wie Vinylacetat, Acrylsäureester, Methacrylsäureester oder Maleinsäureester, ungesättigte Carbonsäuren oder Carbonsäureanhydride wie Acrylsäure, Methacrylsäure, Maleinsäureanhydrid oder Itakonsäureanhydrid sowie Vinylverbindungen wie Vinylchlorid, Vinylidenchlorid, Styren oder α-Methylstyren geeignet. Als radikalische Initiatoren sind Insbesondere Peroxide wie Dicumylperoxid, 2,5-Dimethylhexan-2,5-di-tert.butylperoxid, Pinanhydroperoxid, Di-tert.butylperoxid, Dibenzoylperoxid oder Bis(tert.butylperoxyisopropyl)benzol geeignet, die In Anteilen von 0,001 Masse% bis 0,3 Masse% eingesetzt werden.

Die Homogenisierung der Kunststoffabfälle aus der Haus- und Gewerbemüllaufbereitung sowie die Umsetzung der homogenisierten Kunststoff-schmelze mit ungesättigten Monomeren erfolgt bevorzugt in Doppelschneckenextrudern. Das eingestellte Temperaturprofil muß eine Homogenisierung der Kunststoffschmelze mit eindosiertem Monomer und Peroxid gewährleisten, bevor ein Zerfall des Peroxids einsetzt. Die ungesättigten Monomeren pfropfen in der Schmelze auf die unterschiedlichen Kunststoffkomponenten auf; dabei resultieren Pfropfcopolymere mit unterschiedlicher Pfropfmatrix, aber strukturgleichen Pfropfseltenketten. Durch die Pfropfseitenketten wird eine Teliverträglichkeit der verschiedenen Kunststoffe aus der Haus- und Gewerbemüllaufbereitung erzielt, die zu einer Verbesserung der Festigkeit und Zähigkeit der aus den Rezyklaten hergestellten Halbzeuge und Formstoffe führt.

Die Erfindung soll anhand folgender Ausführungsbeispiele näher erläutert werden:

### Beispiel 1

In einen Werner & Pfleiderer-Doppeischneckenextruder ZSK 83 wird mit 200 kg/h das Kunststoffgemisch der Polyolefinfraktion aus der Schwimm-Sink-Trennanlage der Hausmüllaufbereitung bei 180 °C aufgeschmolzen, homogenisiert und in die Kunststoffschmelze mit 4 l/h eine Lösung von 50 kg Maleinsäureanhydrid in 200 l Styren und 200 l Aceton und mit 150 ml/h eine 50%ige Lösung von Di-tert.-Butylperoxid in Aceton dosiert. In den nachfolgenden Extruderzonen wird die Temperatur stufenweise auf 230 °C erhöht, Lösungsmittel und nicht umgesetztes Monomer durch Vakuumentgasung abgetrennt, die Schmeize ausgetragen und granuliert.

Gepreßte Prüfkörper besitzen folgende Eigenschaften:

| | |
|---|---|
| Zugfestigkeit: | 22,5 N/mm² |
| Grenzbiegespannung: | 31 N/mm² |
| Schlagbiegefestigkeit: | 28 kJ/m² |
| Kerbschlagbiegefestigkeit: | 12 kJ/m² |

Wird die Homogenisierung der Polyolefinfraktion ohne Eindosierung von Monomer und Peroxid vorgenommen, so ergeben sich folgende Werkstoffeigenschaften:

| | |
|---|---|
| Zugfestigkeit: | 18 N/mm² |
| Grenzbiegespannung: | 24 N/mm² |
| Schlagbiegefestigkeit: | 12 kJ/m² |
| Kerbschlagbiegefestigkeit: | 3 kJ/m² |

### Beispiel 2

In einen Extruder nach Beispiel 1 wird mit 150 kg/h ein Altkunststoffgemisch der Haushaltgeräteschrottaufbereitung dosiert, das aus rund 60 Masse% Polyamid, 25 Masse% Polyethylen und 15 Masse% Polypropylen besteht. Nach Aufschmelzen und Homogenisieren bei 230 °C wird in die Kunststoffschmelze mit 12 l/h ein Gemisch aus 80 % n-Butylacrylat und 20 % tert.Butylacrylat und mit 500 ml/h eine 20%ige Lösung von Pinanhydroperoxid in Aceton dosiert. In den nachfolgenden Extruderzonen wird die Temperatur stufenweise auf 270 °C erhöht, Lösungsmittel, Isobutylen und nicht umgesetztes Monomer durch Vakuumentgasung abgetrennt, die Schmeize ausgetragen und granuliert.

Gespritzte Prüfkörper besitzen folgende Eigenschaften:

| | gepfropftes Rezyklat | ohne Monomer und Peroxid compoundiertes Vergleichsmuster |
|---|---|---|
| Zugfestigkeit (N/mm²) | 50 | 40 |
| Reißdehnung (%) | 40 | 5 |

## Patentansprüche

1. Verfahren zur Herstellung von Kunststoffrezyklaten durch Homogenisierung von Kunststoffabfällen aus unterschiedlichen Kunststoffen in der Schmelze, dadurch gekennzeichnet, daß in die homogenisierte Schmeize ungesättigte Monomere in Anteilen von 0,2 bis 10 Masse% sowie radikalische Initiatoren eindosiert werden.

2. Verfahren nach Anspruch 1, dadurch gekennzeichnet, daß als Kunststoffabfälle zerkleinerter gewaschener unsortierter Kunststoffhausmüll eingesetzt wird.

3. Verfahren nach Anspruch 1, dadurch gekennzeichnet, daß als Kunststoffabfälle die Schwimmfraktion der Kunststoffmüllaufbereitung eingesetzt wird.

4. Verfahren nach Anspruch 1, dadurch gekennzeichnet, daß als Kunststoffabfälle zerkleinerte Altfolien eingesetzt werden.

5. Verfahren nach Anspruch 1, dadurch gekennzeichnet, daß als Kunststoffabfälle Altkunststoffe der Kabelschrottaufbereitung eingesetzt werden.

6. Verfahren nach Anspruch 1, dadurch gekennzeichnet, daß als Kunststoffabfälle technische Kunststoffe aus der Elektro- und Haushaltgeräteschrottaufbereitung eingesetzt werden.

7. Verfahren nach Anspruch 1, dadurch gekennzeichnet, daß als ungesättigte Monomere ungesättigte Ester, insbesondere Vinylacetat, Acrylsäureester, Methacrylsäureester oder Maleinsäureester, eingesetzt werden.

8. Verfahren nach Anspruch 1, dadurch gekenhzeichnet, daß als ungesättigte Monomere ungesättigte Carbonsäuren oder Carbonsäureanhydride, insbesondere Acrylsäure, Methacrylsäure, Maleinsäureanhydrid oder Itakonsäureanhydrid, eingesetzt werden.

9. Verfahren nach Anspruch 1, dadurch gekennzeichnet, daß als ungesättigte Monomere Vinylverbindungen, insbesondere Vinylchlorid, Vinylidenchlorid, Styren oder α-Methylstyren, eingesetzt werden.

10. Verfahren nach Anspruch 1, dadurch gekennzeichnet, daß als ungesättigte Monomere ein Gemisch der ungesättigten Monomeren nach Anspruch 7 bis 9 eingesetzt wird.

11. Verfahren nach Anspruch 1, dadurch gekennzeichnet, daß die Homogenisierung der Kunststoffabfälle in der Schmelze sowie die Umsetzung mit ungesättigten Monomeren in Doppelschneckenextrudern vorgenommen wird.

12. Verfahren nach Anspruch 1, dadurch gekennzeichnet, daß als radikalische Initiatoren bei der Umsetzung der Kunststoffschmelze mit ungesättigten Monomeren Peroxide, insbesondere Dicumylperoxid, 2,5-Dimethylhexan-2,5-di-tert.butylperoxid, Pinanhydroperoxid, Di-tert.-butylperoxid, Dibenzoylperoxid oder Bis(tert.butylperoxyisopropyl)benzol, in Anteilen von 0,001 bis 0,3 Masse%, bezogen auf die Polymerschmelze, eingesetzt werden.
